# EUROPÄISCHE PATENTSCHRIFT

(11) **EP 4 140 562 B1**
(45) Veröffentlichungstag und Bekanntmachung des Hinweises auf die Patenterteilung: **07.05.2025**
(21) Anmeldenummer: 21192828.8
(22) Anmeldetag: 24.08.2021
(51) Int. Cl.: B01D 45/08, B01D 46/00, B05B 14/43, B01D 46/58, B01D 46/62, B01D 46/64, B01D 50/20

(54) **FILTERMODUL ZUM ABSCHEIDEN VON OVERSPRAY**
FILTER MODULE FOR THE SEPARATION OF OVERSPRAY
MODULE DE FILTRE PERMETTANT DE SÉPARER L'EXCÉDENT DE PEINTURE PULVÉRISÉE

(43) Veröffentlichungstag der Anmeldung: 01.03.2023
(73) Patentinhaber: Carl Freudenberg KG, 69469 Weinheim (DE)
(72) Erfinder: Schumacher, Sascha, 69483 Wald-Michelbach (DE); Becker, Jürgen, 67378 Zeiskam (DE); Schneider, Silvan, Dr., 68526 Ladenburg (DE); Ewald, Christian, Dr., 64668 Rimbach (DE); Westenburger, Christian, 67735 Mehlbach (DE)

(56) Entgegenhaltungen:
- EP-A1- 3 524 361
- DE-A1- 102013 004 082
- DE-A1- 102018 118 796
- DE-U1- 202014 103 177
- JP-B1- 6 895 011

## Beschreibung

Die Erfindung betrifft ein Filtermodul mit einer Mehrzahl von Filterelementen zum Abscheiden von Overspray aus der Luft.

### Stand der Technik

Bei der Beschichtung und Lackierung von Objekten wie etwa Fahrzeugkarosserien oder Fahrzeugbauteilen in einer Beschichtungskabine wird das Beschichtungsmaterial zerstäubt und mittels eines Luftstroms auf das Objekt befördert. Dabei erreicht nur ein Teil des für das zu beschichtende Objekt gedachten Beschichtungsmaterialstroms das Objekt. Ein anderer Teil verbleibt in dem Luftstrom als Overspray und muss aus dem Luftstrom wieder entfernt werden. Im weiteren Sinne werden hier und im Folgenden die Begriffe Overspray, Overspraypartikel und Oversprayfeststoffe im Sinne eines dispersiven Systems wie beispielsweise einer Emulsion, einer Suspension oder einer Kombination daraus verstanden. Der Overspray wird von dem Luftstrom erfasst und einer Abscheidung zugeführt, sodass die Luft gegebenenfalls nach einer geeigneten Konditionierung wieder in die Beschichtungskabine zurückgeleitet werden kann. Eine derartige Beschichtungsanlage ist beispielsweise in der DE 10 2013 004 082 A1 beschrieben.

Als mögliche Abscheidetechnologie sind in der genannten Druckschrift austauschbare Einwegfiltermodule beschrieben. Die Einwegfiltermodule werden im Laufe des Betriebs von der mit Overspray beladenen Beschichtungskabinenluft durchströmt und so nach und nach weiter mit Overspray beladen. Nach dem Erreichen einer maximal zulässigen Grenzbeladung werden die beladenen Filtermodule gegen unbeladene Filtermodule ausgetauscht.

Die Entsorgung solcher Filtermodule bewirkt große Mengen an Müll, welcher in den Beschichtungsbetrieben zwischengelagert werden muss. Auf Grund des in der Regel ca. 2m³ großen Filtermoduls ist die Entsorgung aufwändig und teuer. Auch nachteilig ist der hohe Ressourcenverbrauch für die Herstellung von neuen Filtermodulen.

Die DE 20 2014 103 177 U1 beschreibt eine Filteranlage für eine Lackieranlage. Die Filteranlage weist mehrere Filtermodule auf, in welche frische Filterelemente eingesetzt und wenn sie verunreinigt, sind wieder entfernt werden können. Während das Filtermodul beispielsweise als immer wieder verwendbarer Wagen ausgestaltet sein kann, können die Filterelemente als Einweg-Filterelemente ausgebildet sein.

### Aufgabenstellung

Aufgabe der vorliegenden Erfindung ist es ein Filtermodul zur Aufnahme von Overspray zu schaffen, welches eine gute Filtrationsleistung sowie eine gute und ressourceneffiziente Handhabung auch bei der Entsorgung aufweist und die Nachteile des Standes der Technik zumindest teilweise behebt.

### Technische Lösung

Gelöst wird diese Aufgabe durch ein Filtermodul, wie es nachfolgend beschrieben und beansprucht ist.

Erfindungsgemäß wurde als vorteilhaft erkannt für das Filtermodul ein Gestell in wiederverwendbarer und reinigbarer Ausführung mit Komponenten zur Aufnahme von Overspray in Einwegausführung zu kombinieren.

Das erfindungsgemäße Filtermodul verfügt über eine Mehrzahl von Filterelementen zum Abscheiden von Overspray aus der Luft und ist zum Einsatz in einer Beschichtungsanlage geeignet, z.B. einer Lackierkammer oder Lackierstraße. Das Filtermodul besitzt ein wiederverwendbares und reinigbares Gestell als Tragstruktur, welches für die Aufnahme von Komponenten zur Aufnahme von Overspray dient. Das Gestell kann insbesondere aus Metall, z.B. Aluminium, oder aus Kunststoff gefertigt sein. Ebenso besitzt das Filtermodul eine Mehrzahl von in das Gestell eingesetzten, ein- und ausschiebbaren bzw. einsetzbaren und herausnehmbaren Komponenten zur Aufnahme von Overspray, welche als Wegwerfprodukte in Einwegausführung ausgebildet sind.

Durch diesen Aufbau wird in vorteilhafter Weise ermöglicht bei Erreichen der maximal zulässigen Beladung des Filtermoduls mit Overspray nur die mit Overspray benetzten Komponenten zu entsorgen und durch neue zu ersetzen. Das Gestell selbst kann wiederverwendet werden. Bevorzugt sind die Komponenten zur Aufnahme von Overspray überwiegend unter Verwendung von recycelten oder nachwachsenden Rohstoffen hergestellt. Weiter wird bevorzugt, wenn sich die Komponenten zur Aufnahme von Overspray zur thermischen Verwertung eignen. Das Gestell kann gereinigt bzw. gesäubert werden und mehrfach eingesetzt werden. So kann die Menge an Abfall reduziert und der Verbrauch an Ressourcen geschont werden.

Erfindungsgemäß handelt es sich bei den Komponenten zur Aufnahme von Overspray zumindest um Filterelemente und um Auskleidungen des Gestells. Die Filterelemente können speziell zur Aufnahme von Overspray optimiert sein. Zum Einsetzen der Filterelemente können als Teil des Gestells mehrere regalartige Aufnahmeböden vorgesehen sein. Die Filterelemente bilden zumindest eine erste Filterstufe aus.

Alle vom Luftstrom beaufschlagten Oberflächen bzw. Flächen des Gestells vor der ersten Filterstufe sind mit den Auskleidungen versehen, derart, dass diese Flächen des Gestells vor Overspray geschützt sind. In anderen Worten: Durch die Auskleidungen wird in vorteilhafter Weise verhindert, dass der mit Overspray beladene Luftstrom mit diesen Flächen in Kontakt kommt und die Flächen veruneinigt werden könnten. Stattdessen werden die Auskleidungen verunreinigt. Dadurch kann der Aufwand für die Reinigung des Gestells vor einer Wiederverwendung auf ein Minimum begrenzt werden. Bei den vom Luftstrom beaufschlagten Flächen des Gestells mit Auskleidungen kann es sich insbesondere um einen oberen Einströmbereich des Gestells und um einen Bereich am Boden des Gestells handeln.

Nach der ersten Filterstufe hat der Luftstrom bereits eine erste Reinigung durch die Filterelemente erfahren, sodass es nicht erforderlich ist, auch sich nach der ersten Filterstufe befindliche Flächen des Gestells mit entsprechenden Auskleidungen zu versehen.

Unter den Flächen des Gestells mit Auskleidung werden hier Flächen mit einer flächigen Erstreckung verstanden. Schmalen Flächen mit eher geringen Breiten und einem Seitenverhältnis von Länge zu Breite größer 20:1, wie beispielsweise Vorderkanten von Regalböden, werden hier nicht als solche Flächen verstanden. Diese schmalen Flächen können beispielsweise mit einem Klebeband beklebt und so vor Overspray geschützt sein.

Besonders vorteilhaft erscheint es, wenn die Auskleidungen aus Pappe, z. B. Wellpappe, Karton oder Papier gebildet werden. Die Auskleidungen können dazu speziell zugeschnitten und ggfs. auch gefaltet sein. Wenn die Auskleidungen auch gefaltet sind, dann weisen sie eine dreidimensionale Ausbildung aus. In einer alternativen und gleichermaßen vorteilhaften Ausführungsform können die Auskleidungen aus Kunststoffplatten oder Folien gebildet werden. Für die Kunststoffplatten und Folien aus Kunststoff kann insbesondere recycelter Kunststoff eingesetzt werden. Bei den Folien kann es sich auch um sogenannte Sprühfolien handeln, welche besonders einfach mittels der Technik der Sprühfolierung aufgespritzt werden können, was auch als Abziehlack bezeichnet wird. Solche Sprühfolien lassen sich besonders einfach wieder von den Flächen abziehen.

In einer besonders vorteilhaften Weiterbildung sind die Auskleidungen oberflächlich auf ihrer dem Luftstrom zugewandten Seite mit kleinen Strömungshindernissen versehen, für eine optimierte Abscheidung von Overspray. Im Gegensatz zu einer ebenen Ausgestaltung der Auskleidungen kann Overspray so besser abgeschieden werden. Im Falle der Ausbildung der Auskleidungen durch Karton, Pappe, Papier oder Kunststoffplatten können diese geschlitzt sein, d.h. eine Vielzahl von Schlitzen aufweisen, wobei jeder Schlitz ein Strömungshindernis ausformt.

Besonders vorteilhaft erscheint es, wenn die Filterelemente des Filtermoduls aus Pappe, Karton oder Papier gebildet werden, z.B. aus Wellpappe, Wellkarton, geschlitztem und/oder aufgewickeltem Karton oder Karton mit Wabenstrukturen. Eine mögliche Ausgestaltung eines solchen Filterelements weist mehrere Lagen geschlitzten Kartons auf, welche von der zu reinigenden Luft durchströmt werden. Die Lagen werden in einer Außenbox aus Karton aufgenommen und sind mit dieser verbunden.

Die Filterelemente des Filtermoduls können zusätzlich oder alternativ Filtermatten aus einem synthetischen Vliesstoff besitzen. Die Filtermatte kann in einem Rahmen aufgenommen sein. Besonders vorteilhaft ist es, wenn die Filtermatte mehrfach gefaltet, insbesondere plissiert ist, zur Erlangung einer größeren wirksamen Filtrationsfläche.

In vorteilhafter Weiterbildung des erfindungsgemäßen Filtermoduls sind mehrere Filterelemente einer ersten Art parallel zueinander angeordnet und bilden eine erste Filterstufe und es sind mehrere Filterelemente einer zweiten Art parallel zueinander angeordnet und bilden eine zweite Filterstufe. Dabei schließen sich erste und zweite Filterstufe direkt aneinander an, d.h. die Filterelemente erster und zweiter Art sind in Reihe zueinander angeordnet ohne Zwischenraum. In anderen Worten: Filterelemente ersten Art und Filterelemente zweiter Art kontaktieren einander, sodass beim Strömen der Luft vom jeweiligen Filterelement erster Art zum nachfolgenden Filterelement zweiter Art keine Verschmutzung des Gestells erfolgen kann. Die Filterelemente können eine Zone ohne Filtermedium besitzen, welche einen Raum zur Strömungshomogenisierung des durchströmenden Luftstromes bildet.

In Weiterbildung des Filtermoduls weist das Gestell Auflageflächen für die Filterelemente auf, z.B. die oben bereits erwähnten Regalböden, und die Auflageflächen besitzen eine geringe Oberflächenenergie, nämlich von unter 50 mJ/m². Somit wird erreicht, dass eine schlechte Benetzbarkeit und Anhaftbarkeit der Auflageflächen gegeben ist und Overspray schlecht bzw. bestenfalls gar nicht an den Auflageflächen anhaften kann.

In Weiterbildung des Filtermoduls handelt es sich bei Komponenten zur Aufnahme von Overspray um eine Wand an dem Gestell. Die Wand bildet dann die Trennschicht zwischen Innen- und Außenraum des Filtermoduls. Zum Einsetzen und Führen der Wände können als Teil des Gestells Nuten vorgesehen sein. Die Komponenten können insbesondere aus Pappe, Karton oder Papier sein, z.B. aus vorgefalzten und/oder gestanzten Pappebögen. Solche Pappebögen können einfach in das Gestell eingebracht oder an diesem befestigt werden.

Das Gestell des Filtermoduls kann einen Lufteinlass und einen Luftauslass besitzen, und durch das Gestell und die Komponenten zur Aufnahme von Overspray wird eine Luftführung vom Lufteinlass zum Luftauslass gebildet, wobei die zu reinigende Luft durch die Filterelemente geführt wird.

In Weiterbildung des erfindungsgemäßen Filtermoduls weist die Luftführung einen Luftkanal auf, welcher - in Durchströmungsrichtung gesehen - zwischen dem Lufteinlass und den Filterelementen positioniert ist, insbesondere zwischen dem Lufteinlass und den Filterelementen einer ersten Filterstufe. Der Luftkanal ist trichterförmig ausgestaltet, und zwar derart, dass sich der Luftkanal verjüngt, d.h. es kann sich seine horizontale Querschnittsfläche von einem im oberen Bereich des Filtermoduls befindlichen Lufteinlass zum Boden des Gestells hin reduzieren. Dadurch kann eine verlustarme Einströmung der Luft bis zu den Filterelementen erreicht werden, die sich in Form niedrigerer Druckverluste äußert, womit nur eine geringe Ventilatorleistung zum Bewegen des Luftstromes durch das Filtermodul erforderlich ist. Zusätzlich führt die trichterförmige Ausgestaltung zu einer gleichmäßigeren Beladung von parallel angeordneten Filterelemente der ersten Filterstufe, da sukzessive Anteile der Luftströmung mit Overspray in die Filterelemente der ersten Filterstufe abgeführt werden. In einer möglichen vorteilhaften Ausgestaltung kann der Luftkanal - in seinem vertikalen Querschnitt in Durchströmungsrichtung - eine Trapezform aufweisen, z.B. die eines rechtwinkligen Trapezes mit einem Innenwinkel von ca. 93 bis 97°.

In vorteilhafter Ausgestaltung des Filtermoduls ist das Gestell aus Aluminiumprofilen aufgebaut und die Aluminiumprofile sind mit Aluminiumblech verkleidet. Ein solches Gestell ist stabil, relativ leicht, beständig gegenüber Overspray und gut reinigbar.

In dem Filtermodul kann in einer vorteilhaften Ausgestaltung eine Brecheinrichtung vorgesehen sein, um Anhaftungen aus Overspray zu brechen und die Filterelemente leichter tauschen zu können. Die Brecheinrichtung kann beispielsweise gebildet werden durch abklappbare Regalböden, auf denen die Filterelemente sitzen. Die Brecheinrichtung kann beispielsweise gebildet werden durch Regalböden mit mindestens einer nutförmigen Vertiefung zur Führung eines von einem Maschinenbediener betätigten Sägeblattes.

Die Brecheinrichtung kann beispielsweise gebildet werden durch eine axial in Strömungsrichtung verschiebbare Aufnahme für Filterelemente der zweiten Filterstufe.

In vorteilhafter Weiterbildung des Filtermoduls ist auf einer Oberseite vom Boden des Gestells eine Sammelwanne vorgesehen, zum Sammeln von Flüssigkeit, z.B. von flüssigem Lackanteil. Diese kann zusätzlich mit einer Öffnungsklappe zum Einschieben von Filterelementen versehen sein, wobei sich die Filterelemente in ihrer Wirkposition direkt oberhalb der Sammelwanne befinden. Dies ermöglicht, dass der in dem Filtermodul zur Verfügung stehende Bauraum bestmöglich zur Aufnahme von Filterelementen ausgenutzt wird.

In einer besonders praktischen Weiterbildung des Filtermoduls ist auf der Unterseite des Bodens des Gestells eine Vorrichtung mit zwei Ausnehmungen vorgesehen, zum Einfahren der Zinken, d.h. der Gabeln eines Flurfördergeräts, insbesondere eines Hubwagens. So kann sichergestellt werden, dass das Filtermodul einfach von einem Maschinenbediener bewegt und ausgetauscht werden kann. Die Vorrichtung kann insbesondere als Europalette ausgeführt sein, welche in das Gestell integrierbar ist. Eine solche ist kostengünstig und allgemein weithin verfügbar.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine räumliche Ansicht eines erfindungsgemäßen Filtermoduls
- Fig. 2: das Filtermodul aus Fig. 1 in einem Teilschnitt
- Fig. 3: die Montage des Filtermoduls aus Fig. 1
- Fig. 4: das wiederverwendbare Gestell des Filtermoduls aus Fig. 1

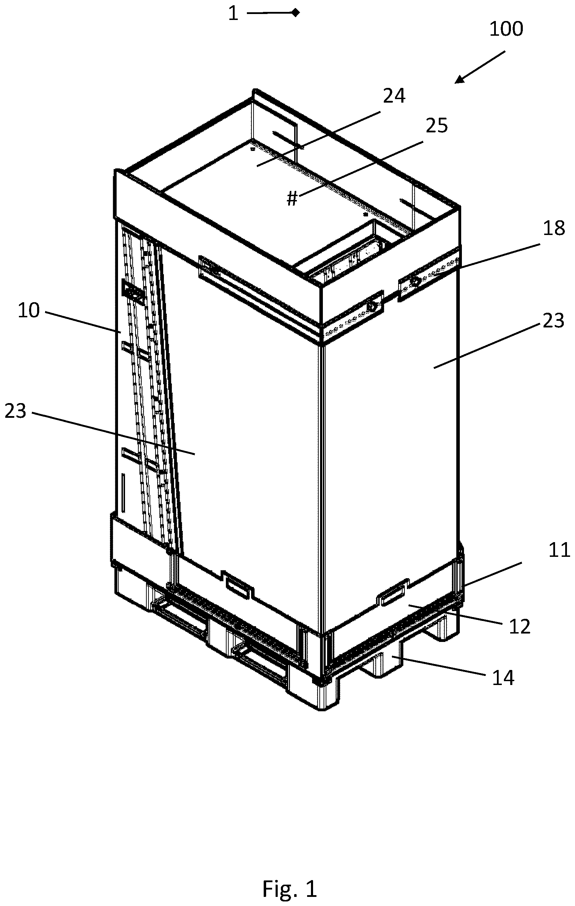

Fig. 1 zeigt eine räumliche Ansicht eines erfindungsgemäßen Filtermoduls 100. Das Filtermodul 100 kann unterhalb einer Lackierkammer oder Lackierstraße 1 angeordnet sein (nicht dargestellt) und dient dem Abscheiden von Overspray aus der Luft, wie es beispielsweise beim Lackieren von Blechteilen entsteht. Das Filtermodul 100 besitzt ein wiederverwendbares und reinigbares Gestell 10, in welchem unterschiedliche Komponenten zur Aufnahme von Overspray 20 eingesetzt werden können und aufgenommen sind. In der Darstellung von Fig. 1 sind an Komponenten zur Aufnahme von Overspray 20 Pappebögen zu erkennen, welche zum einen als Wand 23 an dem Gestell 10 als auch als Auskleidung 24 in dem Gestells 10 dienen. Die Auskleidung 24 deckt eine Fläche 25 des Gestells 10 vor der von ersten Filterelementen 21 (hier nicht zu erkennen) gebildeten ersten Filterstufe ab. Die Wand 23 ist durch einen u-förmig gefalteten Karton gebildet und mittels eines Sicherungsblechs 18 an dem Gestell 10 fixiert. Bei den Komponenten zur Aufnahme von Overspray 20 handelt es sich grundsätzlich um Wegwerfprodukte in Einwegausführung.

Auf der Unterseite des Bodens 11 des Gestells 10 ist eine Europalette 14 angeordnet. Diese dient als Vorrichtung mit zwei Ausnehmungen, in welche die Zinken eines Hubwagens oder eines anderen Flurfördergeräts einfahren können. So kann das Filtermodul 100 problemlos auf einem Hallenboden verfahren werden. Der Austausch eines gebrauchten Filtermoduls 100 durch ein neues bzw. wieder neu bestücktes Filtermodul 100 wird so auf einfache Art und Weise ermöglicht.

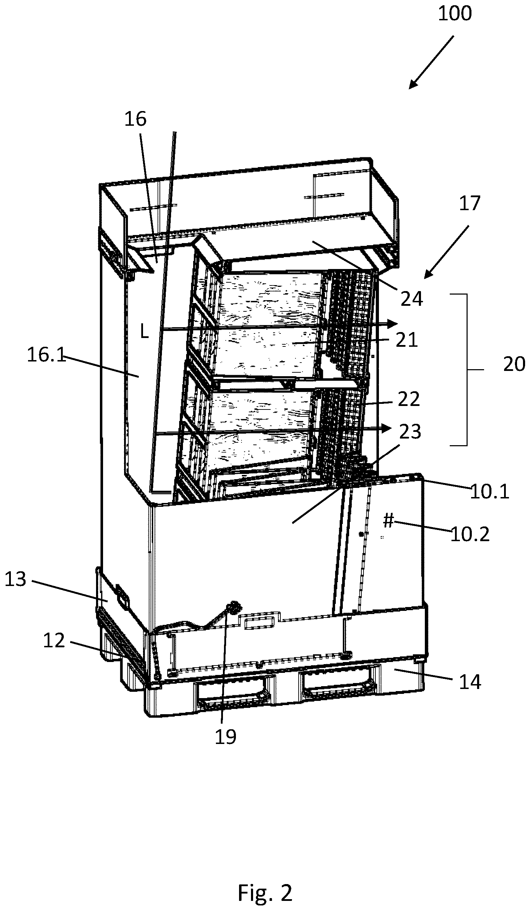

Fig. 2 zeigt das Filtermodul 100 aus Fig. 1 in einem Teilschnitt, welcher das Innere des Filtermoduls 100 freigibt. Im Inneren des Filtermoduls 100 sind als weitere Komponenten zur Aufnahme von Overspray 20 Filterelemente 21 einer ersten Art und Filterelemente 22 einer zweiten Art angeordnet. Die Filterelemente erster Art 21 sind jeweils parallel zueinander angeordnet. Die Filterelemente zweiter Art 22 sind ebenfalls parallel zueinander angeordnet. Die die Filterelemente zweiter Art 22 sind in Reihe zu den Filterelementen erster Art 21 angeordnet, sodass von einem zu reinigenden Luftstrom L zuerst die Filterelemente erster Art 21 und dann die Filterelemente zweiter Art 22 durchströmt werden und der Luftstrom L dabei eine Reinigung erfährt. Die Filterelemente erster Art 21 bilden eine erste Filterstufe und die Filterelemente 22 bilden eine zweite Filterstufe, wobei sich erste und zweite Filterstufe ohne Zwischenraum und nahtlos aneinander anschließen. D.h., zwischen den Filterelementen erster Art 21 und den Filterelementen zweiter Art 22 gibt es keine Zwischenräume, in welchen sich Overspray ansammeln und das Gestell 10 somit verunreinigen könnte.

Das Filtermodul 100 besitzt in seinem Gestell 10 einen Lufteinlass 16 und einen Luftauslass 17. Ein zu reinigender Luftstrom L wird vom Lufteinlass 16 durch die Filterelemente 21 und 22 hindurch zum Luftauslass 17 geleitet und dabei durch die Filterelemente 21 und 22 gereinigt. Die Filterelemente 21 und 22 sind derart in dem Filtermodul 100 angeordnet, dass zwischen dem Lufteinlass 16 und den Filterelementen erster Art 21 ein Luftkanal 16.1 ausgebildet wird. Der Luftkanal 16.1 hat dabei eine trichterförmige Ausgestaltung und verjüngt sich vom Lufteinlass 16 hin zu dem Boden 11 des Gestells 10. So wird eine verlustarme Einströmung des zu filternden Luftstroms L in das Filtermodul 100 bis zu den Filterelementen erster Art 21 sichergestellt. Um flüssige und heruntertropfende Partikel von Overspray aus dem Luftstrom L aufzufangen, ist auf der Oberseite des Bodens 11 des Gestells 10 eine Sammelwanne 12 angeordnet.

Um eine elektrische Aufladung des Filtermoduls 100 zu vermeiden, ist das Gestell 10 mit einem Erdungsanschluss 19 versehen. Eine ungewollte Beeinträchtigung der Filtrationsleistung durch Auswirkung einer Ladung auf den zu reinigenden Luftstrom L und die Gefahr einer Entzündung kann somit gebannt werden. Auch ein Betrieb in sogenannten ATEX-Zonen, also in explosionsgefährdeten Bereichen (ATmosphäres EXplosibles), wird damit ermöglicht.

Nach Erreichen einer maximal zulässigen Grenzbeladung der Filterelemente 21, 22 mit aus dem Luftstrom L herausgefilterten Overspray Partikeln können die Komponenten 20 zur Aufnahme von Overspray aus dem Gestell 10 herausgenommen und entsorgt werden. Bevor wieder frische Komponenten 20 zur Aufnahme von Overspray in das Gestell 10 eingesetzt werden, kann das Gestell 10 gereinigt werden.

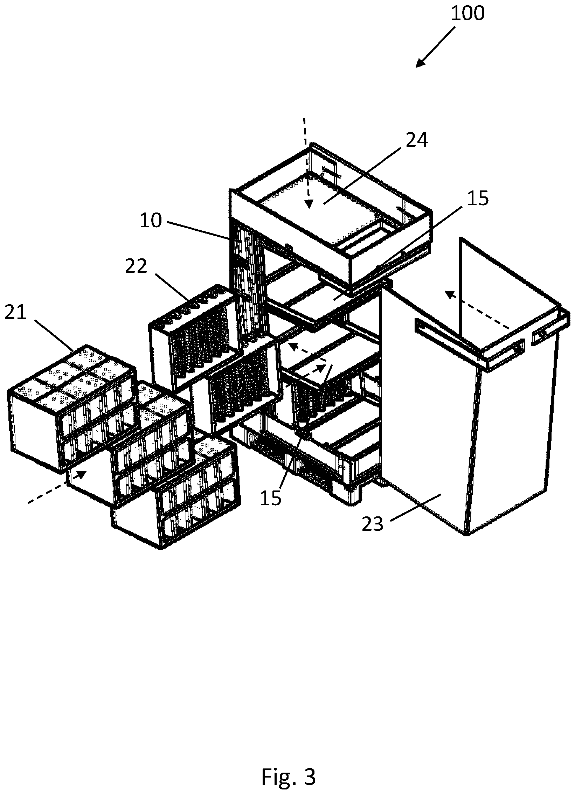

Das Einschieben und Einsetzen der Komponenten zur Aufnahme von Overspray 20 in das Gestell 10 ist in Fig. 3 dargestellt.

Fig. 3 zeigt die Montage des Filtermoduls 100 aus Fig. 1, nämlich die Bestückung mit Komponenten zur Aufnahme von Overspray 20. Wie durch die gestrichelten Pfeile angedeutet, werden die Komponenten zur Aufnahme von Overspray 20 in das Gestell 10 eingebracht und an dem Gestell 10 angebracht. So werden zuerst Filterelemente zweiter Art 22 in die Aufnahmeböden 15 des Gestells 10 eingeschoben. Nachfolgend werden Filterelemente erster Art 21 ebenfalls in die Aufnahmeböden 15 eingeschoben. Nachdem alle Filterelemente 21, 22 in dem Gestell 10 positioniert sind, wird die Wand 23 an dem Gestell 10 angebracht und die Auskleidung 24 eingelegt. Die Wand 23 bildet dann die Trennschicht zwischen Innen- und Außenraum des Filtermoduls 100. In Fig. 3 dargestellt ist ein Montagezustand, zu welchem bereits ein Filterelement zweiter Art 22 in den untersten Aufnahmeboden 15 eingeschoben und die Auskleidung 24 eingelegt ist. Die weiteren Komponenten zur Aufnahme von Overspray 20 müssen noch in das Gestell 10 eingebracht und an dem Gestell 10 angebracht werden.

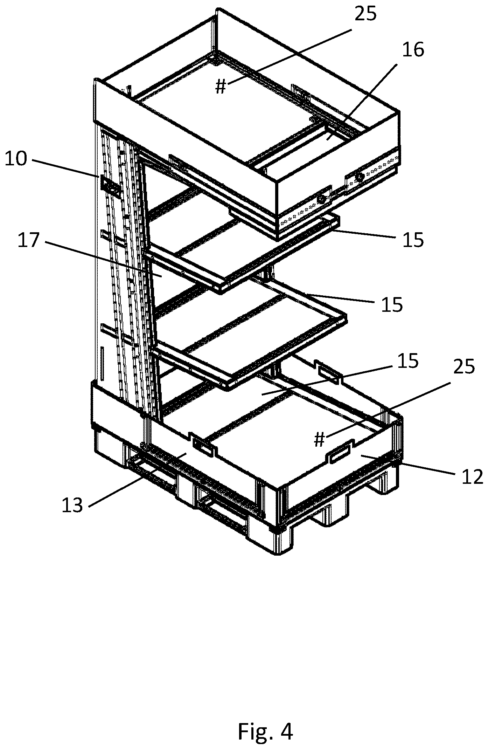

Fig. 4 zeigt das wiederverwendbare Gestell des Filtermoduls 100 aus Fig. 1 ohne Komponenten zur Aufnahme von Overspray 20, sodass die Elemente des Gestells 10 besser zu erkennen sind. Das Gestell 10 besitzt drei Aufnahmeböden 15, in welche jeweils Filterelemente 21, 22 eingeschoben und eingesetzt werden können. Um ein Einschieben von Filterelementen 21, 22 auch auf dem untersten Aufnahmeboden 15 zu ermöglichen, ist die Sammelwanne 12 in einer ihrer seitlichen Wände mit einer Öffnungsklappe 13 versehen. Bei geöffneter Öffnungsklappe 13, wie das auch in Fig. 3 dargestellt ist, können die untersten Filterelemente 21, 22 problemlos eingeschoben werden. Eine Fläche 25 am Boden des Gestells 10 kann mit einer Auskleidung 24 versehen werden, welche in die Sammelwanne 12 eingelegt wird.

Das Gestell 10 ist aus Aluminiumprofilen 10.1 und Aluminiumblech 10.2 aufgebaut, wie es auch in der Schnittdarstellung von Fig. 2 zu erkennen ist. Das Aluminiumblech 10.2 verkleidet das Gerüst aus Aluminiumprofilen 10.1., sodass ebene, leicht zu reinigende Flächen entstehen.

## Patentansprüche

1. Filtermodul (100) mit einer Mehrzahl von Filterelementen (21, 22) zum Abscheiden von Overspray aus einem Luftstrom (L),
wobei das Filtermodul (100) ein wiederverwendbares und reinigbares Gestell (10) als Tragstruktur für die Aufnahme von Komponenten zur Aufnahme von Overspray (20) und
eine Mehrzahl von in das Gestell (10) eingesetzten Komponenten zur Aufnahme von Overspray (20) besitzt
**dadurch gekennzeichnet, dass**
es sich bei den Komponenten zur Aufnahme von Overspray (20) zumindest um Filterelemente (21, 22) und Auskleidungen (24) in dem Gestell (10) handelt, welche als Wegwerfprodukte in Einwegausführung ausgebildet sind,
dass die Filterelemente (21) zumindest eine erste Filterstufe ausbilden und dass alle vom Luftstrom (L) beaufschlagten Flächen (25) des Gestells (10) vor der ersten Filterstufe mit den Auskleidungen (24) versehen sind, derart, dass diese Flächen (25) des Gestells (10) vor Overspray geschützt sind.

2. Filtermodul nach Anspruch 1, **dadurch gekennzeichnet, dass** es sich bei den vom Luftstrom (L) beaufschlagten Flächen (25) des Gestells (10) mit den Auskleidungen (24) um einen oberen Einströmbereich des Gestells (10) und um einen Bereich am Boden des Gestells (10) handelt.

3. Filtermodul nach einem der vorangehenden Ansprüche, **dadurch gekennzeichnet, dass**
die Filterelemente (21, 22) aus Pappe, Karton oder Papier gebildet werden und / oder, dass die Auskleidungen (24) aus Pappe, Karton oder Papier, Kunststoffplatten oder Folien gebildet werden.

4. Filtermodul nach einem der vorangehenden Ansprüche, **dadurch gekennzeichnet, dass**
die Auskleidungen (24) oberflächlich mit Strömungshindernissen versehen sind, für eine optimierte Abscheidung von Overspray.

5. Filtermodul nach einem der vorangehenden Ansprüche, **dadurch gekennzeichnet, dass**
die Filterelemente (21, 22) Filtermatten aus einem synthetischen Vliesstoff besitzen.

6. Filtermodul nach einem der vorangehenden Ansprüche, **dadurch gekennzeichnet, dass**
mehrere Filterelemente (21) einer ersten Art parallel zueinander angeordnet sind und eine erste Filterstufe bilden und, dass mehrere Filterelemente (22) einer zweiten Art parallel zueinander angeordnet sind und eine zweite Filterstufe bilden und, dass sich erste und zweite Filterstufe direkt aneinander anschließen.

7. Filtermodul nach einem der vorangehenden Ansprüche, **dadurch gekennzeichnet, dass**
das Gestell (10) Auflageflächen für die Filterelemente (21, 22) aufweist und die Auflageflächen eine geringe Oberflächenenergie aufweisen.

8. Filtermodul nach einem der vorangehenden Ansprüche, **dadurch gekennzeichnet, dass**
es sich bei den Komponenten (20) zur Aufnahme von Overspray um eine Wand (23) an dem Gestell handelt, insbesondere aus Pappe, Karton oder Papier.

9. Filtermodul nach einem der vorangehenden Ansprüche, **dadurch gekennzeichnet, dass**
das Gestell (10) einen Lufteinlass (16) und einen Luftauslass (17) besitzt, und dass durch das Gestell (10) und die Komponenten zur Aufnahme von Overspray (20) eine Luftführung vom Lufteinlass (16) zum Luftauslass (17) gebildet wird.

10. Filtermodul nach Anspruch 9, **dadurch gekennzeichnet, dass** die Luftführung einen Luftkanal (16.1) aufweist, welcher - in Durchströmungsrichtung gesehen - zwischen dem Lufteinlass (16) und den Filterelementen (21) positioniert ist, wobei der Luftkanal (16.1) trichterförmig ausgestaltet ist.

11. Filtermodul nach einem der vorangehenden Ansprüche, **dadurch gekennzeichnet, dass**
das Gestell (10) aus Aluminiumprofilen (10.1) aufgebaut ist und die Aluminiumprofile (10.1) mit Aluminiumblech (10.2) verkleidet sind.

12. Filtermodul nach einem der vorangehenden Ansprüche, **dadurch gekennzeichnet, dass**
eine Brecheinrichtung vorgesehen ist, um Anhaftungen aus Overspray an dem Filtermodul zu brechen und die Filterelemente (21, 22) leichter tauschen zu können.

13. Filtermodul nach einem der vorangehenden Ansprüche, **dadurch gekennzeichnet, dass**
auf einer Oberseite des Bodens (11) des Gestells (10) eine Sammelwanne (12) vorgesehen ist, zum Sammeln von Flüssigkeit, insbesondere mit einer Öffnungsklappe (13) zum Einschieben von Filterelementen (21, 22).

14. Filtermodul nach einem der vorangehenden Ansprüche, **dadurch gekennzeichnet, dass**
auf der Unterseite des Bodens (11) des Gestells (10) eine Vorrichtung mit zwei Ausnehmungen vorgesehen ist, zum Einfahren der Zinken eines Flurfördergeräts, insbesondere eines Hubwagens und, dass die Vorrichtung insbesondere als Europalette (14) ausgeführt ist.

## Claims

1. Filter module (100) having a plurality of filter elements (21, 22) for separating overspray out of an air stream (L),
wherein the filter module (100) has a reusable and cleanable rack (10) as supporting structure for accommodating components for absorbing overspray (20), and
a plurality of components (10) for absorbing overspray (20), which are inserted into the rack,
**characterized in that**
the components for absorbing overspray (20) involve at least filter elements (21, 22) and liners (24) in the rack (10) that are designed for single use as disposable products,
**in that** the filter elements (21) form at least a first filter stage,
and **in that** all those surfaces (25) of the rack (10) before the first filter stage which are impinged on by the air stream (L) are provided with the liners (24) such that said surfaces (25) of the rack (10) are protected from overspray.

2. Filter module according to Claim 1, **characterized in that**
the surfaces (25) of the rack (10) with the liners (24) that are impinged on by the air stream (L) are an upper inflow region of the rack (10) and a region at the base of the rack (10).

3. Filter module according to one of the preceding claims, **characterized in that** the filter elements (21, 22) are formed from paperboard, cardboard or paper, and/or in that the liners (24) are formed from paperboard, cardboard or paper, plastic sheets or films.

4. Filter module according to one of the preceding claims, **characterized in that** the linings (24) are provided with flow obstacles on the surface for optimized separation of overspray.

5. Filter module according to one of the preceding claims, **characterized in that** the filter elements (21, 22) have filter mats composed of a synthetic non-woven material.

6. Filter module according to one of the preceding claims, **characterized in that** multiple filter elements (21) of a first type are arranged parallel to one another and form a first filter stage, and **in that**
multiple filter elements (22) of a second type are arranged parallel to one another and form a second filter stage, and **in that**
the first and second filter stages directly adjoin one another.

7. Filter module according to one of the preceding claims, **characterized in that** the rack (10) has supporting surfaces for the filter elements (21, 22), and the supporting surfaces have a low surface energy.

8. Filter module according to one of the preceding claims, **characterized in that** the components (20) for absorbing overspray involve a wall (23) on the rack, in particular composed of paperboard, cardboard or paper.

9. Filter module according to one of the preceding claims, **characterized in that** the rack (10) has an air inlet (16) and an air outlet (17), and **in that** an air guide from the air inlet (16) to the air outlet (17) is formed by the rack (10) and the components for absorbing overspray (20).

10. Filter module according to Claim 9, **characterized in that**
the air guide has an air channel (16.1) which - as seen in the throughflow direction - is positioned between the air inlet (16) and the filter elements (21), wherein the air channel (16.1) is of funnel-shaped form.

11. Filter module according to one of the preceding claims, **characterized in that** the rack (10) is constructed from aluminium profiles (10.1), and the aluminium profiles (10.1) are lined with aluminium sheet (10.2).

12. Filter module according to one of the preceding claims, **characterized in that** a breaking device is provided for the purpose of breaking up adhesions of overspray on the filter module and the filter elements (21, 22) being able to be exchanged more easily.

13. Filter module according to one of the preceding claims, **characterized in that** a collecting trough (12) is provided on a top side of the base (11) of the rack (10) for the purpose of collecting liquid, said collecting trough having in particular an opening flap (13) for pushing-in of filter elements (21, 22).

14. Filter module according to one of the preceding claims, **characterized in that** an apparatus with two cutouts is provided on the bottom side of the base (11) of the rack (10) for moving-in of the forks of an industrial truck, in particular a lifting truck, and **in that** the apparatus is designed in particular as a Euro pallet (14).

## Revendications

1. Module de filtre (100) présentant une multitude d'éléments de filtre (21, 22) et destiné à séparer un brouillard de pulvérisation d'un flux d'air (L),
le module de filtre (100) possédant un châssis (10) réutilisable et nettoyable en tant que structure support pour le logement de composants destinés à absorber le brouillard de pulvérisation (20) et
une multitude de composants utilisés dans le châssis (10), destinés à absorber le brouillard de pulvérisation (20),
**caractérisé en ce que**
il s'agit, pour les composants destinés à absorber le brouillard de pulvérisation (20), au moins d'éléments de filtre (21, 22) et de revêtements (24) dans le châssis (10), qui sont conçus comme éléments jetables en exécution à usage unique,
**en ce que** les éléments de filtre (21) forment au moins un premier étage de filtre et **en ce que** toutes les surfaces (25) du châssis (10) soumises au flux d'air (L) sont pourvues, en amont du premier étage de filtre, des revêtements (24) de telle sorte que ces surfaces (25) du châssis (10) sont protégées contre le brouillard de pulvérisation.

2. Module de filtre selon la revendication 1, **caractérisé en ce que**
il s'agit, pour les surfaces (25) du châssis (10) soumises au flux d'air (L) présentant les revêtements (24), d'une zone d'entrée supérieure du châssis (10) et d'une zone dans le fond du châssis (10).

3. Module de filtre selon l'une des revendications précédentes, **caractérisé**
**en ce que**
les éléments de filtre (21, 22) sont formés de carton-pâte, de carton ou de papier et/ou en ce que les revêtements (24) sont formés de carton-pâte, de carton ou de papier, de plaques de matériau synthétique ou de feuilles.

4. Module de filtre selon l'une des revendications précédentes, **caractérisé**
**en ce que**
les revêtements (24) sont pourvus en surface d'obstacles d'écoulement, pour une séparation optimisée du brouillard de pulvérisation.

5. Module de filtre selon l'une des revendications précédentes, **caractérisé**
**en ce que**
les éléments de filtre (21, 22) présentent des nattes de filtre en un non-tissé synthétique.

6. Module de filtre selon l'une des revendications précédentes, **caractérisé**
**en ce que**
plusieurs éléments de filtre (21) d'un premier type sont agencés parallèlement les uns aux autres et forment un premier étage de filtre et en ce que
plusieurs éléments de filtre (22) d'un second type sont agencés parallèlement les uns aux autres et forment un second étage de filtre et en ce que
le premier et le second étage de filtre se raccordent directement l'un à l'autre.

7. Module de filtre selon l'une des revendications précédentes, **caractérisé**
**en ce que**
le châssis (10) présente des surfaces d'appui pour les éléments de filtre (21, 22) et les surfaces d'appui présentent une faible énergie de surface.

8. Module de filtre selon l'une des revendications précédentes, **caractérisé**
**en ce que**
il s'agit, pour les composants (20) destinés à absorber le brouillard de pulvérisation, d'une paroi (23) sur le châssis, en particulier en carton-pâte, en carton ou en papier.

9. Module de filtre selon l'une des revendications précédentes, **caractérisé**
**en ce que**
le châssis (10) présente une entrée d'air (16) et une sortie d'air (17) et en ce que le châssis (10) et les composants destinés à absorber le brouillard de pulvérisation (20) forment un guide d'air depuis l'entrée d'air (16) vers la sortie d'air (17).

10. Module de filtre selon la revendication 9, **caractérisé en ce que**
le guide d'air présente un canal à air (16.1) qui - vu dans le sens d'écoulement - est positionné entre l'entrée d'air (16) et la sortie d'air (21), le canal à air (16.1) étant conçu en forme d'entonnoir.

11. Module de filtre selon l'une des revendications précédentes, **caractérisé**
**en ce que**
le châssis (10) est construit en profilés d'aluminium (10.1) et les profilés d'aluminium (10.1) sont recouverts de tôle d'aluminium (10.2).

12. Module de filtre selon l'une des revendications précédentes, **caractérisé**
**en ce que**
un dispositif briseur est prévu, destiné à briser des adhérences de brouillard de pulvérisation sur le module de filtre et à pouvoir remplacer plus facilement les éléments de filtre (21, 22).

13. Module de filtre selon l'une des revendications précédentes, **caractérisé**
**en ce que**
un bac collecteur (12) est prévu sur une face supérieure du fond (11) du châssis (10) et est destiné à collecter du liquide, présentant en particulier un clapet d'ouverture (13) destiné à insérer des éléments de filtre (21, 22).

14. Module de filtre selon l'une des revendications précédentes, **caractérisé**
**en ce que**
un dispositif présentant deux évidements est prévu sur la face inférieure du fond (11) du châssis (10), destiné à l'introduction des fourches d'un engin de manutention, en particulier d'un chariot élévateur et en ce que le dispositif est en particulier réalisé sous forme d'europalette (14).
